# EUROPEAN PATENT SPECIFICATION

(11) **EP 1 565 659 B1**
(45) Date of publication and mention of the grant of the patent: **14.11.2007**
(21) Application number: 03782227.7
(22) Date of filing: 25.11.2003
(51) Int. Cl.: F15D 1/06, F15D 1/12

(54) **METHOD AND DEVICE FOR GENERATING MIXTURES OF FLUIDS IN A BOUNDARY LAYER**
VERFAHREN UND VORRICHTUNG ZUR MISCHUNG VON FLUIDEN IN EINER GRENZSCHICHT
PROCEDE ET DISPOSITIF POUR GENERER DES MELANGES DE FLUIDES DANS UNE COUCHE LIMITE

(30) Priority: 25.11.2002 EP 02400050
(43) Date of publication of application: 24.08.2005
(73) Proprietor: Vida, Nikolaus, Dr., 72516 Scheer (DE)
(72) Inventor: VIDA, Nikolaus, 72516 Scheer (DE); KIKNADEZ, Gennady Iraklievich, Moscow, 123436 (RU); GACHECHILADZE, Ivan Alexandrovich, Moscow, 129010 (RU)
(74) Representative: Herden, Andreas F.
(86) International application number: PCT/EP2003/013241
(87) International publication number: WO 2004/048871

(56) References cited:
- EP-A- 0 679 812
- WO-A-97/04280
- US-A- 4 932 612
- US-A- 5 445 095
- US-A- 5 803 409
- US-B1- 6 349 734
- US-B1- 6 371 414

## Description

### Field of the Invention

The invention concerns surface areas as boundary layers of surfaces of moving vehicles or walls of containers surrounding streaming fluids as mixtures of gases, liquids or combinations of gases and liquids.

### Background of the Invention

In various applications flowing media play a significant role. These applications range from vehicles moving in air or in water to pumping or pipe line systems.

In most cases different media with different properties are involved. Various methods are known to shape devices with respect to flowing media so that certain effects are optimised. These methods usually are based on the principle to avoid the building of vortices in the flowing media.

From US 6,349,734 B1 also a method is known which uses so-called Görtler vortices to extend the time a substance, provided as a mixture or a solution, remains in the near-wall region of a flow, thereby preventing fluid mixture in the boundary layer.

US 5,803,409 discloses a flow control device for drag reduction and separation control. The device includes hydraulically smooth surface -mounted actuators that generate normal vorticity at the surface by rotary motion of disks or rotors. The device permits an enhanced mixing and surface heat transfer modification.

In US 6,371,414, a system and method for manipulating and controlling aerodynamic or hydrodynamic fluid flow over a surface is shown. The system and method uses very small scale effectors.

In US 4,932, 61,2 a method and apparatus for reducing skin friction on bodies moving relative to a fluid is disclosed. The method combines the effect of selective suction with wit a longitudinal ribbed surface to achieve drag reduction.

US 5,445,095 describes a process for reducing skin friction and inhibiting the effects of liquid turbulence in different systems involving liquid flow along a surface of a body. A drag reduction polymer is injected into longitudinal grooves on the surface of a hydrodynamic body. The polymer diffuses into the flow around the body. As the polymer reaches the near wall region of the boundary layer, the polymer begins to reduce the turbulent skin friction.

WO 97/04280 describes a method and apparatus for controlling the boundary layer or the wall layer of a continuous medium consisting of gases in the vicinity of a surface for changing the flow structure.

### Summary of the Invention

Therefore, it is an object of the present invention to show a way how the mixture of fluids in a boundary layer of a surface can be improved.

The object of the invention is achieved in a surprisingly simple manner by a subject matter of one of the attached independent claims. Advantageous embodiments and refinements are defined in the respective dependent claims.

The invention teaches to use vortices to generate an area of a mixture of fluids by introducing media having at least a different physical or chemical property into a boundary layer of a surface, said media having a reduced friction.

The vortices are self organizing tornado-like vortices generated according to a method and a device as claimed in EP 0 679 812 patent or in WO 97/04280. The complete content of EP 0 679 812 and WO 97/04280 is hereby incorporated into this application by reference.

The opening is located in a dimple defined in the surface.

In a preferred embodiment said media are comprising gases, preferably air, and gas liquid mixtures.

In a further preferred embodiment said vortices are used for sucking bubbles from the surface of a vehicle, especially from the body and/or propeller of a ship, into an area of a vortex having reduced pressure to avoid an increase of cavitation.

In case of a propeller, especially in view of different pressure regimes on the both sides and different velocities of the propeller blades vortex generators adapted to the specific requirements of the respective location are used.

In a further preferred embodiment media are introduced into said boundary layer from an opening located in said surface or in the vicinity of said surface connecting a source of said media having less friction with the boundary layer.

Exhaust gases can be used as gases if said opening communicates with an exhaust system of an engine of the vehicle and assists in evacuating exhaust gases.

In a further preferred embodiment said opening is in the neighborhood of catalytic substances and promotes a catalytic reaction of exhaust gases.

In a most preferred embodiment a plurality of dimples and openings are located at an outer surface of a ship.

To provide an improved performance, said plurality of dimples and openings comprises dimples of different shape adapted to the requirements of a special area of the surface.

In a further most preferred embodiment, said surface is part of a pipe line system especially of a petrol, mineral oil or fuel pipe line system and, advantageously, said gas or gas liquid mixture is comprising gases accumulated in the course of petrol exhaustion or production.

The invention further may be used as chemical pump and mixing system if the different physical property is the chemical composition. This pump system provides special advantages especially for systems containing aggressive or radio active components as wear of bearings and other movable parts is drastically reduced.

If the different physical property is the temperature, very reliable cooling systems can be realized.

In a more general manner the invention also teaches using said low pressure area of said vortices as a pumping means for pumping media from a higher to a lower pressure regime.

As a consequence of this more general aspect of the invention use as a nautical pump out system is proposed.

The inventive device uses vortices to generate an area of a mixture of fluids by introducing media having at least a different physical or chemical property into a boundary layer of a surface.

Advantageously the different physical or chemical property of the media is reduced friction and the media are comprising gases, preferably air, and gas liquid mixtures.

With special advantage the inventive device comprises means to suck bubbles from a surface into an area of a vortex having reduced pressure. Preferably the device comprises a being part is the surface of a vehicle, especially from the body and/or propeller of a ship. Any surface of any vehicle, along which at least one medium is flowing, also lies within the scope of the invention. The great advantage of means to suck bubbles from a surface into an area of a vortex having reduced pressure is that an increase of cavitation is avoided by that.

Preferably the device comprises means for introduction of the media into the boundary layer of a surface from an opening located in said surface or in the vicinity of said surface connecting a source of at least one medium with the boundary layer, preferably a source of said media having less friction.

With advantage the vortices generated by the device are self organizing tornado-like vortices. Self organizing tornado-like vortices can be generated according to a method and a device as claimed in EP 0 679 812 or in WO 97/04280.

With advantage the device comprises a surface with at least one opening located in at least one dimple defined in the surface, providing for the introduction of the media into the boundary layer of the surface from the opening, said surface being a surface of a vehicle or part of a vehicle.

Preferably said opening communicates with an exhaust system of an engine of a vehicle and assists in evacuating exhaust gases. With advantage said opening can be located in the neighborhood of catalytic substances, thus promoting a catalytic reaction of exhaust gases.

Advantageously said surface comprises a plurality of dimples and openings located at an outer surface of a vehicle, preferably a ship. The plurality of dimples and openings comprise preferably dimples of different shape adapted to the requirements of a special area of the surface.

It also lies within the scope of the invention to provide means in the device to exert electrical, magnetical and/or mechanical influences, by which vortices are generated.

The device can also be part of a pipe line system, especially of a petrol, mineral oil or fuel pipe line system. The mixture of fluids generated by the device by means of the vortices can be a gas or gas liquid mixture, preferably comprising gases accumulated in the course of petrol exhaustion or production.

The at least different physical or chemical property of the media can be preferably the chemical composition, the device being a chemical pump or mixing system or part thereof. An inventive pump system provides special advantages especially for systems containing aggressive or radio active components as wear of bearings and other movable parts is drastically reduced.

The at least different physical or chemical property of the media can also be preferably the temperature. In this case the device can be a cooling or air conditioning system.

Through the vortices medium flows in certain directions are built in the vicinity of the boundary layer of the surface, leading to a transport of bubbles or other particles away from the surface. This effect can also be very advantageous in cooling or air conditioning system, since freezing can be reduced.

The media differing in any other physical or chemical property can also be suitable for certain applications.

The device can also be a pump system or part thereof. A low pressure area generated by means of the vortices is in this case used as a pumping means for pumping media from a higher to a lower pressure regime. Further the device can also be a nautical pump out system or part thereof.

### Detailed Description of the Invention

The invention together with several preferred embodiments will be better understood from the belowstanding detailed description in conjunction with the attached drawings wherein it is shown in:
Fig. 1: a surface with dimples having openings with different media on the two sides of the surface
Fig. 2: a top view of a surface with dimples having openings
Fig. 3: a preferred distribution of dimples
Fig. 4: a cross section through a surface with dimples having openings
Fig. 5: a part of a pipe line system comprising dimples on the inner surface

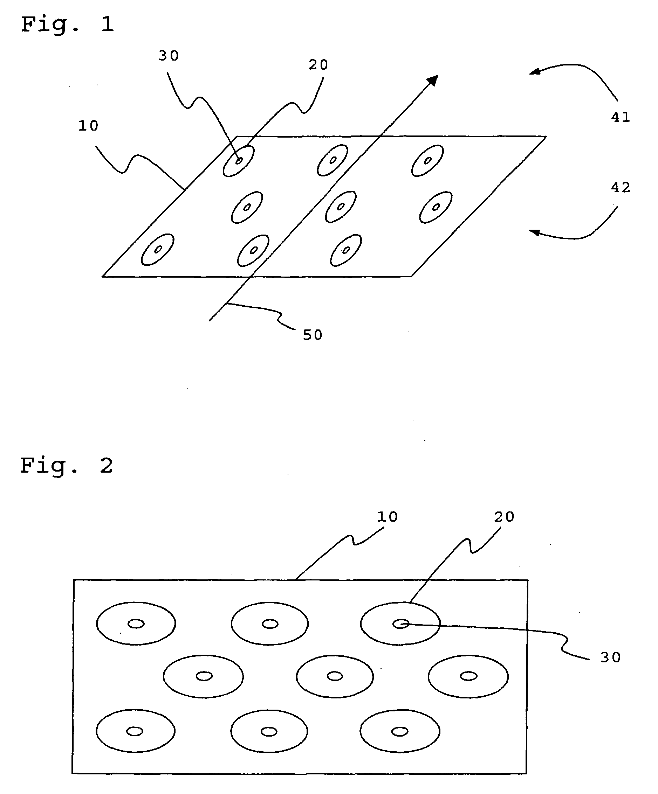

Fig. 1 shows a surface 10 which is provided with dimples 20 having an opening 30. By means of the openings 30 the first side 41 and the second side 42 of the surface 10 are connected. Along the first side 41 of the surface 10 a first medium flows in the direction indicated by the arrow 50.

By means of the dimples 20 vortices are built in the boundary layer of the flowing first medium. The vortices generate an area of low pressure in the vicinity of the dimples 20.

That way a second medium, which is provided on the second side 42 of the surface 10 and has at least a different physical or chemical property with respect to the first medium, is sucked through the opening 30 to the first side 41 of the surface, thus generating an area of a mixture of the first and the second medium in the boundary layer of surface 10.

In Fig. 2 a possible distribution of dimples 20 on a surface 10 having openings 30 is shown schematically. In this embodiment the dimples 20 have an oval outline in the shown top view. In the cross section of the surface 10 the dimples 20 show concavities and convexities. Various other shapes of the dimples 20 also lie within the scope of the invention.

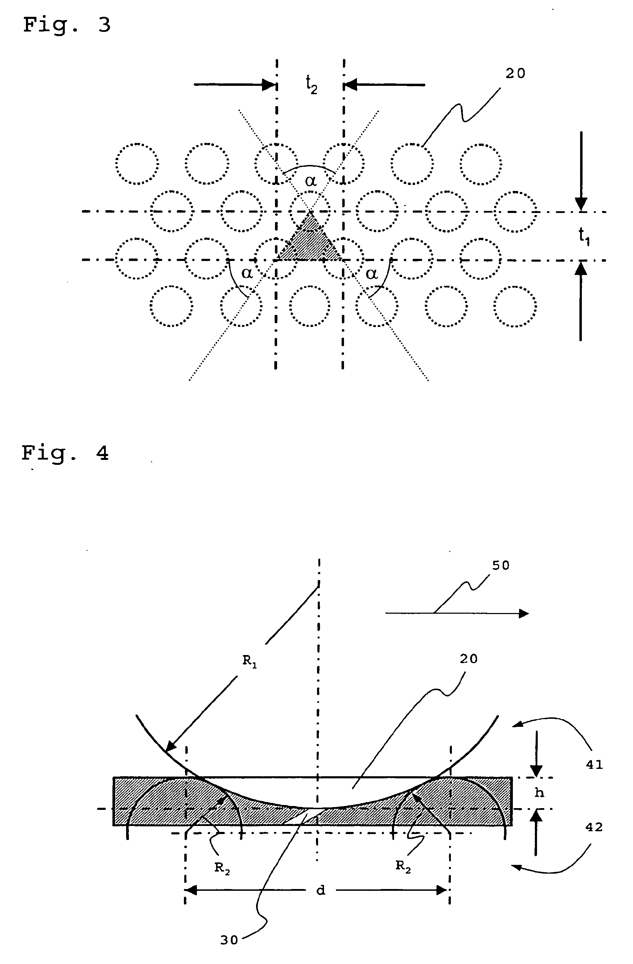

Fig. 3 shows a further preferred distribution of dimples on a surface. The dimples 20 in this embodiment have a circular outline and are arranged periodically on a surface. By the centers of three neighboring dimples an equilateral triangle is formed, angle α thus being 60°. The distance of the centers of two neighboring dimples 20 is t₂, the distance between two consecutive rows of dimples 20 is t₁. The values of t₁ and t₂ can vary depending on the application. The dimples 20 can be provided with openings connecting the two sides of the surface not shown in Fig. 3.

A cross section of a surface provided with dimples is shown schematically in Fig. 4. The dimple 20 in this embodiment shows a spherical surface with radius R₁, which is rounded at the edges by radii-forming with radius R₂, and has a height h and a diameter d. The dimples 20 in this example are symmetrical with respect to rotation with a rotation axis through the center of the dimple 20. The dimple 20 is located on a first side 41 of the surface 10 and is provided with an opening in the center adjoining a channel 30 by which a connection to the second side 42 of the surface is achieved.

The channel 30 is formed so that a second medium located on the second side 42 of the surface 10 can easily be sucked through the channel 30 to the first side 41 of the surface, when a first medium flows on the first side 41 of the surface in the direction indicated by arrow 50.

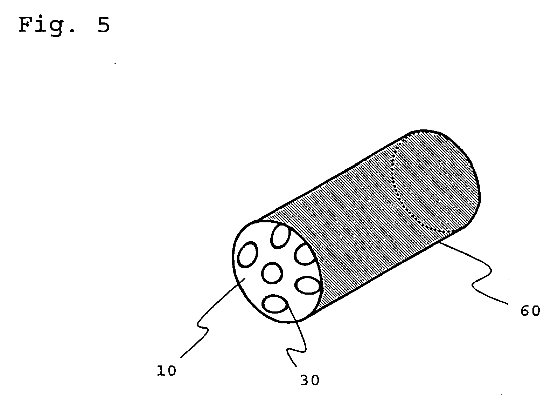

Fig. 5 shows a tube 60 which can be part of a pipe line system, especially of a petrol, mineral oil or fuel pipe line system. The tube 60 is provided with dimples 20 on the inner surface 10. The dimples may be provided with openings connecting the inside and outside area of the tube 60.

## Claims

1. Method of using self organizing tornado-like vortices to generate an area of mixture between first and second media, said first media flowing along a surface, said second media being introduced in a boundary layer of said first media, said second media having at least a physical or chemical property different from the first media,
wherein said second media are introduced into said boundary layer from an opening (30) located in a dimple (20) defined in said surface (10), and
wherein said second media have less friction than said first media.

2. Method according to claim 1, **characterized in that** said media comprises gases, preferably air, and gas liquid mixtures.

3. Method according to claim 1 or 2, **characterized in that** bubbles are sucked from the surface of a vehicle, especially from the body and/or propeller of a ship, into an area of a vortex having reduced pressure to avoid an increase of cavitation.

4. Method according to claim 1, 2 or 3 **characterized in that** the dimple (20) is defined in the surface (10) of a vehicle.

5. Method according to one of the preceding claims, **characterized in that** said opening (30) communicates with an exhaust system of an engine of the vehicle and assists in evacuating exhaust gases.

6. Method according to claim 5, **characterized in that** said opening (30) is in the neighborhood of catalytic substances and promotes a catalytic reaction of exhaust gases.

7. Method according to any of the preceding claims **characterized by** using a plurality of dimples (20) and openings (30) located at an outer surface of a ship.

8. Method according to claim 6, **characterized in that** said plurality of dimples (20) and openings (30) comprises dimples (20) of different shape adapted to the requirements of a special area of the surface (10).

9. Method according to claim 8, **characterized in that** said vortices are generated by means of electrical, magnetical and/or mechanical influences.

10. Method according to claim 1 or 2, **characterized in that** said surface is part of a pipe line system especially of a petrol, mineral oil or fuel pipe line system.

11. Method according to claim 8, **characterized in that** said gas or gas liquid mixture is comprising gases accumulated in the course of petrol exhaustion or production.

12. Method according to one of the preceding claims **characterized in that** said second media have a chemical composition different from said first media.

13. Method according to one of the preceding claims **characterized in that** said different physical property is the temperature.

14. Method according to one of the preceding claims comprising using said low pressure area of said vortices as a pumping means for pumping media from a higher to a lower pressure regime.

15. Method according to one of the preceding claims used as a nautical pump out system.

16. Device comprising a surface along which first media are flowing, a source of second media having at least a physical or chemical property different from the first media,
wherein said second media are introduced in a boundary layer of said first media from an opening located in a dimple (20) defined in said surface (10), said opening (30) connecting said source of said second media with the boundary layer,
wherein said second media have less friction than said first media, and
whereby self organizing tornado-like vortices are built to generate an area of mixture between the first and second media.

17. Device according to claim 16, **characterized in that** said media are comprising gases, preferably air, and gas liquid mixtures.

18. Device according to claim 16 or 17, comprising means to suck bubbles from the surface of a vehicle, especially from the body and/or propeller of a ship, into an area of a vortex having reduced pressure to avoid an increase of cavitation.

19. Device according to one of claims 16 to 18, **characterized in that** said opening (30) communicates with an exhaust system of an engine of the vehicle and assists in evacuating exhaust gases.

20. Device according to claim 19, **characterized in that** said opening (30) is in the neighborhood of catalytic substances and promotes a catalytic reaction of exhaust gases.

21. Device according to one of the claims 16 to 20 **characterized by** a plurality of dimples (20) and openings (30) located at an outer surface of a ship.

22. Device according to claim 21, **characterized in that** said plurality of dimples (20) and openings (30) comprises dimples (20) of different shape adapted to the requirements of a special area of the surface (10).

23. Device according to claim 16 or 17, **characterized in that** said surface (10) is part of a pipe line system especially of a petrol, mineral oil or fuel pipe line system.

24. Device according to claim 23, **characterized in that** said gas or gas liquid mixture is comprising gases accumulated in the course of petrol exhaustion or production.

25. Device according to one of the claims 16 to 24 **characterized in that** said second media have a chemical composition different from said first media.

26. Device according to one of claims 16 to 25 **characterized in that** the different physical property is the temperature.

27. Device according to one of claims 16 to 26 comprising said low pressure area of said vortices as a pumping means for pumping media from a higher to a lower pressure regime.

28. Device according to one of claims 16 to 27 **characterized** that said device is a nautical pump out system.

## Patentansprüche

1. Verfahren zur Nutzung von sich selbst organisierenden tornadoähnlichen Wirbeln, um einen Bereich einer Mischung zwischen einem ersten und einem zweiten Medium zu erzeugen, wobei das erste Medium an einer Oberfläche entlang strömt und das zweite Medium in eine Grenzschicht des ersten Mediums eingeführt wird, wobei sich das zweite Medium in zumindest einer physikalischen oder chemischen Eigenschaft von dem ersten Medium unterscheidet,
wobei das zweite Medium von einer Öffnung (30) aus in die Grenzschicht eingeführt wird, die in einer in der Oberfläche (10) definierten Vertiefung (20) angeordnet ist, und
wobei das zweite Medium eine geringere Reibung als das erste Medium aufweist.

2. Verfahren nach Anspruch 1, **dadurch gekennzeichnet, dass** die Medien Gase, vorzugsweise Luft, sowie Gas-Flüssigkeits-Mischungen umfassen.

3. Verfahren nach Anspruch 1 oder 2, **dadurch gekennzeichnet, dass** Blasen von der Oberfläche eines Fahrzeugs, insbesondere vom Rumpf und/oder Propeller eines Schiffs, in einen Bereich eines Wirbels mit reduziertem Druck eingesaugt werden, um eine Zunahme der Kavitation zu verhindern.

4. Verfahren nach Anspruch 1, 2 oder 3, **dadurch gekennzeichnet, dass** die Vertiefung (20) in der Oberfläche (10) eines Fahrzeugs definiert ist.

5. Verfahren nach einem der vorhergehenden Ansprüche, **dadurch gekennzeichnet, dass** die Öffnung (30) mit einem Abluftsystem eines Motors des Fahrzeugs in Verbindung steht und das Absaugen von Abgasen unterstützt.

6. Verfahren nach Anspruch 5, **dadurch gekennzeichnet, dass** die Öffnung (30) in der Nähe katalytischer Substanzen angeordnet ist und eine katalytische Reaktion der Abgase unterstützt.

7. Verfahren nach einem der vorhergehenden Ansprüche, **gekennzeichnet durch** Nutzung einer Mehrzahl von Vertiefungen (20) und Öffnungen (30), die an einer Außenseite eines Schiffs angeordnet sind.

8. Verfahren nach Anspruch 6, **dadurch gekennzeichnet, dass** die Mehrzahl von Vertiefungen (20) und Öffnungen (30) Vertiefungen (20) mit unterschiedlicher Gestalt umfasst, die an die Anforderungen eines speziellen Bereichs der Oberfläche (10) angepasst sind.

9. Verfahren nach Anspruch 8, **dadurch gekennzeichnet, dass** die Wirbel durch elektrische, magnetische und/oder mechanische Einflüsse erzeugt werden.

10. Verfahren nach Anspruch 1 oder 2, **dadurch gekennzeichnet, dass** die Oberfläche Teil eines Rohrleitungssystems, insbesondere eines Erdöl-, Mineralöl- oder Kraftstoff-Rohrleitungssystems ist.

11. Verfahren nach Anspruch 8, **dadurch gekennzeichnet, dass** das Gas oder die Gas-Flüssigkeits-Mischung Gase umfasst, die sich im Rahmen des Abbaus oder der Produktion von Erdöl ansammeln.

12. Verfahren nach einem der vorhergehenden Ansprüche, **dadurch gekennzeichnet, dass** das zweite Medium eine andere chemische Zusammensetzung als das erste Medium aufweist.

13. Verfahren nach einem der vorhergehenden Ansprüche, **dadurch gekennzeichnet, dass** die unterschiedliche physikalische Eigenschaft die Temperatur ist.

14. Verfahren nach einem der vorhergehenden Ansprüche, welches die Nützung des Niederdruckbereichs der Wirbel als Pumpmittel zum Pumpen von Medien aus einem Regime mit höherem zu einem Regime mit niedrigerem Druck umfasst.

15. Verfahren nach einem der vorhergehenden Ansprüche, welches als nautisches Auspumpsystem genutzt wird.

16. Vorrichtung, die eine Oberfläche umfasst, entlang welcher ein erstes Medium strömt, sowie eine Quelle eines zweiten Mediums, das sich in zumindest einer physikalischen oder chemischen Eigenschaft von dem ersten Medium unterscheidet,
wobei das zweite Medium in eine Grenzschicht des ersten Mediums von einer Öffnung aus eingeführt wird, die in einer in der Oberfläche (10) definierten Vertiefung (20) angeordnet ist, wobei die Öffnung (30) die Quelle des zweiten Mediums mit der Grenzschicht verbindet,
wobei das zweite Medium weniger Reibung als das erste Medium aufweist und
wodurch sich selbst organisierende tornadoartige Wirbel gebildet werden, sodass ein Bereich einer Mischung zwischen dem ersten und dem zweiten Medium erzeugt wird.

17. Vorrichtung nach Anspruch 16, **dadurch gekennzeichnet, dass** die Medien Gase, vorzugsweise Luft, sowie Gas-Flüssigkeits-Mischungen umfassen.

18. Vorrichtung nach Anspruch 16 oder 17, welche Mittel umfasst, um Blasen von der Oberfläche eines Fahrzeugs, insbesondere vom Rumpf und/oder Propeller eines Schiffs, in einen Bereich eines Wirbels mit reduziertem Druck einzusaugen, um eine Zunahme der Kavitation zu verhindern.

19. Vorrichtung nach einem der Ansprüche 16 bis 18, **dadurch gekennzeichnet, dass** die Öffnung (30) mit einem Abluftsystem eines Motors des Fahrzeugs in Verbindung steht und das Absaugen von Abgasen unterstützt.

20. Vorrichtung nach Anspruch 19, **dadurch gekennzeichnet, dass** die Öffnung (30) in der Nähe katalytischer Substanzen angeordnet ist und eine katalytische Reaktion der Abgase unterstützt.

21. Vorrichtung nach einem der Ansprüche 16 bis 20, **gekennzeichnet durch** eine Mehrzahl von Vertiefungen (20) und Öffnungen (30), die an einer Außenseite eines Schiffs angeordnet sind.

22. Vorrichtung nach Anspruch 21, **dadurch gekennzeichnet, dass** die Mehrzahl von Vertiefungen (20) und Öffnungen (30) Vertiefungen (20) mit unterschiedlicher Gestalt umfasst, die an die Anforderungen eines speziellen Bereichs der Oberfläche (10) angepasst sind.

23. Vorrichtung nach Anspruch 16 oder 17, **dadurch gekennzeichnet, dass** die Oberfläche (10) Teil eines Rohrleitungssystems, insbesondere eines Erdöl-, Mineralöl- oder Kraftstoff-Rohrleitungssystems ist.

24. Vorrichtung nach Anspruch 23, **dadurch gekennzeichnet, dass** das Gas oder die Gas-Flüssigkeits-Mischung Gase umfasst, die sich im Rahmen des Abbaus oder der Produktion von Erdöl ansammeln.

25. Vorrichtung nach einem der Ansprüche 16 bis 24, **dadurch gekennzeichnet, dass** das zweite Medium eine andere chemische Zusammensetzung als das erste Medium aufweist.

26. Vorrichtung nach einem der Ansprüche 16 bis 25, **dadurch gekennzeichnet, dass** die unterschiedliche physikalische Eigenschaft die Temperatur ist.

27. Vorrichtung nach einem der Ansprüche 16 bis 26, welche den Niederdruckbereich der Wirbel als Pumpmittel zum Pumpen von Medien aus einem Regime mit höherem zu einem mit niedrigerem Druck umfasst.

28. Vorrichtung nach einem der Ansprüche 16 bis 27, **dadurch gekennzeichnet, dass** die Vorrichtung ein nautisches Auspumpsystem darstellt.

## Revendications

1. Procédé d'utilisation de tourbillons analogues à des cyclones s'organisant d'eux-mêmes pour générer une zone de mélange entre des premiers et seconds milieux, lesdits premiers milieux s'écoulant le long d'une surface, lesdits seconds milieux étant introduits dans une couche limite desdits premiers milieux, lesdits seconds milieux ayant au moins une propriété physique ou chimique différente de celles des premiers milieux,
dans lequel lesdits seconds milieux sont introduits dans ladite couche limite depuis une ouverture (30) placée dans une empreinte (20) définie dans ladite surface (10), et
dans lequel lesdits secondes milieux ont un frottement inférieur à celui desdits premiers milieux.

2. Procédé selon la revendication 1, **caractérisé en ce que** lesdits milieux comprennent des gaz, avantageusement de l'air, et des mélanges de gaz et de liquides.

3. Procédé selon la revendication 1 ou 2, **caractérisé en ce que** des bulles sont aspirées depuis la surface d'un véhicule, en particulier depuis la coque et/ou l'hélice d'un navire, jusque dans une zone d'un tourbillon ayant une pression réduite pour éviter un accroissement de la cavitation.

4. Procédé selon la revendication 1, 2 ou 3, **caractérisé en ce que** l'empreinte (20) est définie dans la surface (10) d'un véhicule.

5. Procédé selon l'une des revendications précédentes, **caractérisé en ce que** ladite ouverture (30) communique avec un système d'échappement d'un moteur du véhicule et aide à évacuer des gaz d'échappement.

6. Procédé selon la revendication 5, **caractérisé en ce que** ladite ouverture (30) est au voisinage de substances catalytiques et favorise une réaction catalytique de gaz d'échappement.

7. Procédé selon l'une quelconque des revendications précédentes, **caractérisé par** l'utilisation de multiples empreintes (20) et ouvertures (30) situées à une surface extérieure d'un navire.

8. Procédé selon la revendication 6, **caractérisé en ce que** lesdites multiples empreintes (20) et ouvertures (30) comprennent des empreintes (20) de formes différentes adaptées aux exigences d'une zone spéciale de la surface (10).

9. Procédé selon la revendication 8, **caractérisé en ce que** lesdits tourbillons sont générés au moyen d'effets électriques, magnétiques et/ou mécaniques.

10. Procédé selon la revendication 1 ou 2, **caractérisé en ce que** ladite surface est une partie d'un système de canalisation, en particulier un système de canalisation de pétrole, d'huile minérale ou de carburant.

11. Procédé selon la revendication 8, **caractérisé en ce que** ledit gaz ou mélange de gaz et de liquides comprend des gaz accumulés au cours d'un épuisement ou d'une production de pétrole.

12. Procédé selon l'une des revendications précédentes, **caractérisé en ce que** lesdits seconds milieux ont une composition chimique différente de celle desdits premiers milieux.

13. Procédé selon l'une des revendications précédentes, **caractérisé en ce que** ladite propriété physique différente est la température.

14. Procédé selon l'une des revendications précédentes, comprenant l'utilisation de ladite zone à basse pression desdits tourbillons en tant que moyen de pompage pour pomper des milieux d'un régime à pression plus élevé vers un régime à pression plus basse.

15. Procédé selon l'une des revendications précédentes, utilisé en tant que système de pompage nautique.

16. Dispositif comportant une surface le long de laquelle des premiers milieux s'écoulent, une source de seconds milieux ayant au moins une propriété physique ou chimique différente de celles des premiers milieux,
dans lequel lesdits seconds milieux sont introduits dans une couche limite desdits premiers milieux depuis une ouverture située dans une empreinte (20) définie dans ladite surface (10), ladite ouverture (30) raccordant ladite source desdits seconds milieux à la couche limite,
dans lequel lesdits seconds milieux ont un frottement inférieur à celui desdits premiers milieux, et
par lequel des tourbillons analogues à des cyclones s'organisant d'eux-mêmes sont constitués pour générer une zone de mélange entre les premiers et seconds milieux.

17. Dispositif selon la revendication 16, **caractérisé en ce que** lesdits milieux comprennent des gaz, avantageusement de l'air, et des mélanges de gaz et de liquides.

18. Dispositif selon la revendication 16 ou 17, comportant des moyens destinés à aspirer des bulles depuis la surface d'un véhicule, en particulier depuis la coque et/ou l'hélice d'un navire, jusque dans une zone d'un tourbillon ayant une pression réduite pour éviter un accroissement de la cavitation.

19. Dispositif selon l'une des revendications 16 à 18, **caractérisé en ce que** ladite ouverture (30) communique avec un système d'échappement d'un moteur du véhicule et aide à évacuer les gaz d'échappement.

20. Dispositif selon la revendication 19, **caractérisé en ce que** ladite ouverture (30) est au voisinage de substances catalytiques et favorise une réaction catalytique de gaz d'échappement.

21. Dispositif selon l'une des revendications 16 à 20, **caractérisé par** de multiples empreintes (20) et ouvertures (30) situées à une surface extérieure d'un navire.

22. Dispositif selon la revendication 21, **caractérisé en ce que** lesdites multiples empreintes (20) et ouvertures (30) comprennent des empreintes (20) de différentes formes adaptées aux exigences d'une zone spéciale de la surface (10).

23. Dispositif selon la revendication 16 ou 17, **caractérisé en ce que** ladite surface (10) fait partie d'un système de canalisation, en particulier un système de canalisation de pétrole, d'huile minérale ou de carburant.

24. Dispositif selon la revendication 23, **caractérisé en ce que** ledit gaz ou mélange de gaz et de liquides comprend des gaz accumulés au cours d'un épuisement ou d'une production de pétrole.

25. Dispositif selon l'une des revendications 16 à 24, **caractérisé en ce que** lesdits seconds milieux ont une composition chimique différente de celle desdits premiers milieux.

26. Dispositif selon l'une des revendications 16 à 25, **caractérisé en ce que** la propriété chimique différente est la température.

27. Dispositif selon l'une des revendications 16 à 26, comportant ladite zone à basse pression desdits tourbillons en tant que moyen de pompage pour pomper des milieux d'un régime à pression plus élevée vers un régime à pression plus basse.

28. Dispositif selon l'une des revendications 16 à 27, **caractérisé en ce que** ledit dispositif est un système de pompage marin.
